# EUROPÄISCHE PATENTSCHRIFT

(11) **EP 2 986 420 B1**
(45) Veröffentlichungstag und Bekanntmachung des Hinweises auf die Patenterteilung: **17.01.2018**
(21) Anmeldenummer: 14714737.5
(22) Anmeldetag: 03.04.2014
(51) Int. Cl.: B25B 27/00

(54) **MONTAGEVORRICHTUNG UND VERFAHREN ZUR GEGENKRAFTFREIEN MONTAGE EINER DRUCKPLATTENBAUGRUPPE AN EINER GEGENDRUCKPLATTE, SOWIE VERFAHREN ZUR GEGENKRAFTFREIEN DEMONTAGE**
MOUNTING DEVICE AND METHOD FOR THE COUNTERFORCE-FREE MOUNTING OF A PRESSURE PLATE ASSEMBLY ON A COUNTERPRESSURE PLATE, AND METHOD FOR COUNTERFORCE-FREE DISMOUNTING
DISPOSITIF DE MONTAGE ET PROCÉDÉ SERVANT AU MONTAGE SANS FORCE ANTAGONISTE D'UN GROUPE DE PLAQUES DE PRESSION AU NIVEAU D'UNE PLAQUE DE CONTRE-PRESSION, AINSI QUE PROCÉDÉ SERVANT AU DÉMONTAGE SANS FORCE ANTAGONISTE

(30) Priorität: 17.04.2013 DE 102013206891
(43) Veröffentlichungstag der Anmeldung: 24.02.2016
(73) Patentinhaber: Schaeffler Technologies AG & Co. KG, 91074 Herzogenaurach (DE)
(72) Erfinder: GÜTLE, Martin, 77654 Offenburg-Windschläg (DE); HURLE, Tanja, 76437 Rastatt (DE); MULLER, Sebastien, F-67450 Mundolsheim (FR); HORNBERGER, Volker, 72285 Pfalzgrafenweiler (DE)
(86) Internationale Anmeldenummer: PCT/EP2014/056698
(87) Internationale Veröffentlichungsnummer: WO 2014/170133

(56) Entgegenhaltungen:
- DE-U1- 29 915 947
- US-A1- 2008 276 768

## Beschreibung

Die vorliegende Erfindung betrifft eine Kombination aus Druckplattenbaugruppe und Montagevorrichtung zur gegenkraftfreien Montage einer Druckplattenbaugruppe an einer Gegendruckplatte gemäß dem Oberbegriff des Patentanspruchs 1.

Aus der DE 20 2010 011 709 U1 ist eine Montagevorrichtung zur gegenkraftfreien Montage einer Druckplattenbaugruppe an einer Gegendruckplatte bekannt. Die Montagevorrichtung weist mehrere Justagekörper auf, mittels derer die Montagevorrichtung an der motorseitigen Gegendruckplatte verschraubt werden kann. Um die Justagekörper auf unterschiedliche Kupplungstypen und Lochbilder einstellen zu können, sind die Justagekörper zum einen auf zwei unterschiedlichen, in Umfangsrichtung zueinander verdrehbaren Brücken vorgesehen, und zum anderen auf diesen Brücken jeweils in Langlöchern gelagert, wodurch sie in radialer Richtung relativ zueinander positioniert werden können.

Es wird als nachteilig angesehen, dass die besagte Montagevorrichtung aufgrund der zwei Brücken relativ groß baut. Hierdurch kann die Handhabung erschwert werden.

Aus der US 2008/0276768 A1 ist eine Kombination aus Druckplattenbaugruppe und Montagevorrichtung gemäß dem Oberbegriff des Patentanspruchs 1 bekannt.

Es ist Aufgabe der vorliegenden Erfindung, eine Kombination aus Druckplattenbaugruppe und Montagevorrichtung zur gegenkraftfreien Montage einer Druckplattenbaugruppe an einer Gegendruckplatte anzugeben, die eine einfache Handhabung ermöglicht.

Erfindungsgemäß gelöst wird diese Aufgabe durch eine Kombination aus Druckplattenbaugruppe und Montagevorrichtung zur gegenkraftfreien Montage einer Druckplattenbaugruppe an einer Gegendruckplatte gemäß Patentanspruch 1 mit zumindest einem bezüglich der Druckplattenbaugruppe in axialer Richtung verlagerbaren Ausrückelement, das ausgebildet ist, Tellerfederzungen der Druckplattenbaugruppe mit einer Axialkraft zu beaufschlagen, um die normal-eingerückte Druckplattenbaugruppe auszurücken, und mit zumindest einem Hakenelement, das ausgebildet ist, einen Kupplungsdeckel der Druckplattenbaugruppe zu hintergreifen, um die Montagevorrichtung bezüglich der Druckplattenbaugruppe zumindest in axialer Richtung ortsfest zu halten, wenn das Ausrückelement die Tellerfederzungen der Druckplattenbaugruppe mit der Axialkraft beaufschlagt.

Durch das Hakenelement, das ausgebildet ist, den Kupplungsdeckel der Druckplattenbaugruppe zu hintergreifen, kann sich die Montagevorrichtung direkt am Kupplungsdeckel abstützen. Es ist nicht mehr erforderlich, die Montagevorrichtung an der Gegendruckplatte abzustützen, wodurch sich zum einen die Größe der Montagevorrichtung, insbesondere in Umfangsrichtung, aber auch in axialer Richtung verringern kann, und sich zum anderen die Handhabung für den Anwender der Montagevorrichtung verbessern kann.

Das Hakenelement bildet einen Teil eines Bajonettverschlusses und ist ausgebildet, mit dem Kupplungsdeckel als zweiten Teil eine Bajonettverbindung auszubilden. Dies stellt eine besonders anwendungsfreundliche Möglichkeit dar, die Montagevorrichtung mit der Druckplattenbaugruppe zu verbinden.

Bevorzugte Ausführungsbeispiele der vorliegenden Erfindung sind in den abhängigen Ansprüchen dargelegt.

Vorzugsweise sind mehrere Hakenelemente in Umfangsrichtung der Montagevorrichtung, insbesondere vorzugsweise gleichmäßig, voneinander beabstandet angeordnet. Dies ermöglicht zum einen eine gleichmäßige Krafteinleitung in den Kupplungsdeckel, während zum anderen die Montagevorrichtung auf einfache Art und Weise auf dem Kupplungsdeckel zentriert werden kann. Die Hakenelemente sind ausgebildet, den Kupplungsdeckel von einer Zentralöffnung des Kupplungsdeckels kommend zu hintergreifen. Die Hintergreifung erfolgt somit in radialer Richtung von innen kommend, wodurch die äußeren Abmessungen der Montagevorrichtung, insbesondere in Umfangsrichtung der Montagevorrichtung, verringert werden können.

Die Montagevorrichtung weist ein Basiselement auf, das ausgebildet ist, außerhalb der Druckplattenbaugruppe auf dem Kupplungsdeckel zur Anlage zu kommen, und an dem das Ausrückelement in axialer Richtung der Montagevorrichtung verlagerbar angeordnet ist. Vorzugsweise ist das Basiselement im Wesentlichen ringförmig ausgebildet. Das Ausrückelement kann mittelbar oder unmittelbar am Basiselement vorgesehen sein. Insbesondere ist es von Vorteil, wenn das Ausrückelement an einer Spindeleinheit bzw. als Teil einer Spindeleinheit vorgesehen ist, die in einem basiselementseitigen Spindelhalter gelagert ist. Wird die Spindeleinheit gedreht, setzt die Spindeleinheit die Drehbewegung in eine axiale Bewegung um, wodurch das Ausrückelement in axialer Richtung bewegt wird. Jedoch ist es auch möglich, das Ausrückelement auf andere Art und Weise in axialer Richtung zu bewegen, beispielsweise mittels eines Hydraulikzylinders.

Insbesondere ist es von Vorteil, wenn das Basiselement und das Hakenelement ausgebildet sind, die Montagevorrichtung in axialer Richtung fest auf dem Kupplungsdeckel zu halten. Dabei wird der Kupplungsdeckel in axialer Richtung zwischen dem Basiselement auf der einen Seite, insbesondere auf der Oberseite, und dem Hakenelement auf der anderen Seite, insbesondere auf der Unterseite, geklemmt. Dadurch wird ein Verkanten oder Verrutschen der Montagevorrichtung verhindert, selbst wenn das Ausrückelement noch nicht an den Tellerfederzungen der Druckplattenbaugruppe anliegt, bzw. mit den Tellerfederzungen der Druckplattenbaugruppe in Eingriff ist.

Gemäß einem weiteren bevorzugten Ausführungsbeispiel weist das Basiselement eine Zentralöffnung auf, deren Durchmesser vorzugsweise im Wesentlichen dem Durchmesser der Zentralöffnung des Kupplungsdeckels entspricht. Das Hakenelement ist in der Nähe der Zentralöffnung verkippbar und/oder in Umfangsrichtung verdrehbar am Basiselement gelagert, um den Kupplungsdeckel zu hintergreifen. Dies ermöglicht einen besonders kompakten und gut zu bedienenden Aufbau der Montagevorrichtung.

Vorzugsweise weist das Ausrückelement in seinem Endbereich ein Druckelement auf, das ausgebildet ist, mit den Tellerfederzungen vom Kupplungsdeckel kommend in Anlage zu kommen, um die normal-eingerückte, gedrückte Druckplattenbaugruppe auszurücken. Das Druckelement kann beispielsweise als Scheibe oder als Endbereich der bereits zuvor erwähnten Spindeleinheit ausgebildet sein.

Ebenso ist es von Vorteil, wenn das Ausrückelement in seinem Endbereich ein Zugelement aufweist, das hakenförmig ausgebildet ist, um die Tellerfederzungen von einer Anpressplatte der Druckplattenbaugruppe kommend zu hintergreifen, um die normal-eingerückte, gezogene Druckplattenbaugruppe auszurücken. Beispielsweise kann das Zugelement hakenförmige Abschnitte aufweisen, die vom Kupplungsdeckel kommend in Umfangsrichtung zwischen benachbarten Tellerfederzungen eindringen. Wenn diese Hakenabschnitte auf der Rückseite der Tellerfederzungen, das heißt auf der Seite der Tellerfederzungen, die der Anpressplatte zugewandt ist, angekommen sind, wird das Zugelement geringfügig in Umfangsrichtung verdreht, so dass die Hakenabschnitte mit den Rückseiten der Tellerfederzungen in Anlage kommen, um diese zu hintergreifen.

Um die Montagevorrichtung sowohl für normal-eingerückte, gedrückte Druckplattenbaugruppen, als auch für normal-eingerückte, gezogene Druckplattenbaugruppen verwenden zu können, ist es von Vorteil, wenn verschiedene Ausrückelemente montiert werden können, beispielsweise wenn das zuvor erwähnte Druckelement durch das zuvor erwähnte Zugelement ersetzt werden kann, und umgekehrt. Ebenso ist es möglich, die Funktionen des Druckelements und des Zugelements in einem Ausrückelement zu kombinieren.

Weiterhin ist es von Vorteil, wenn die Montagevorrichtung, vorzugsweise das Basiselement der Montagevorrichtung, zumindest eine Verdrehsicherung aufweist, die mit dem Kupplungsdeckel in Eingriff bringbar ist, um ein Verdrehen der Montagevorrichtung in Umfangsrichtung zu verhindern. Diese Verdrehsicherung ist insbesondere dann von Vorteil, wenn die Montagevorrichtung eine Spindeleinheit aufweist, die eine Drehbewegung in eine Axialbewegung des Ausrückelements umsetzt, da gerade wenn die Montagevorrichtung noch nicht hinreichend verspannt ist, das heißt das Ausrückelement noch nicht auf die Tellerfederzungen wirkt, ein Mitdrehen der Montagevorrichtung möglich ist.

Gemäß einem weiteren bevorzugten Ausführungsbeispiel weist die Montagevorrichtung, vorzugsweise das Basiselement der Montagevorrichtung, zumindest eine Spanneinrichtung auf, die auf das oder die Hakenelemente einwirkt, um ein Herausspringen des oder der Hakenelemente während des Ausrückvorgangs zu verhindern. Diese Spanneinrichtung kann beispielsweise durch einen Zugring, dessen Durchmesser verringerbar ist, und der auf die freien Ende der Hakenelemente wirkt, gebildet sein, kann aber auch durch einzelne, in radialer Richtung einschraubbare Bolzen gebildet sein, von denen jeder auf ein freies Ende eines Hakenelements einwirkt. Auch andere Ausbildungen der Spanneinrichtung sind möglich, beispielsweise formschlüssige Spanneinrichtungen, bei denen Hinterschnitte oder Hintergreifungen ein Herausspringen des oder der Hakenelemente verhindern.

Ferner ist ein Verfahren zur gegenkraftfreien Montage einer Druckplattenbaugruppe an einer Gegendruckplatte mittels einer Montagevorrichtung nach zumindest einem der vorangegangenen Ausführungsbeispiele offenbart, wobei die Montagevorrichtung mittels ihres Basiselements auf eine Oberseite des Kupplungsdeckels der Druckplattenbaugruppe aufgesetzt wird, das oder die Hakenelemente verdreht und/oder verkippt werden, um eine Hinterseite des Kupplungsdeckels zu hintergreifen, so dass die Montagevorrichtung in axialer Richtung fest auf dem Kupplungsdeckel aufsitzt, das Ausrückelement bezüglich der Druckplattenbaugruppe in axialer Richtung verlagert wird, um die Tellerfederzungen mit einer Axialkraft zu beaufschlagen und die normal-eingerückte Druckplattenbaugruppe auszurücken, und die Druckplattenbaugruppe mit der Gegendruckplatte fest verbunden wird.

Ferner ist ein Verfahren zur gegenkraftfreien Demontage einer Druckplattenbaugruppe von einer Gegendruckplatte mittels einer Montagevorrichtung nach zumindest einem der vorangegangenen Ausführungsbeispiele offenbart, wobei die Montagevorrichtung mittels ihres Basiselements auf eine Oberseite des Kupplungsdeckels der Druckplattenbaugruppe aufgesetzt wird, das oder die Hakenelemente verdreht und/oder verkippt werden, um eine Hinterseite des Kupplungsdeckels zu hintergreifen, so dass die Montagevorrichtung in axialer Richtung fest auf dem Kupplungsdeckel aufsitzt, das Ausrückelement bezüglich der Druckplattenbaugruppe in axialer Richtung verlagert wird, um die Tellerfederzungen mit einer Axialkraft zu beaufschlagen und die normal-eingerückte Druckplattenbaugruppe auszurücken, und die Druckplattenbaugruppe von der Gegendruckplatte gelöst wird.

Die vorliegende Erfindung wird nachfolgend anhand von bevorzugten Ausführungsbeispielen in Verbindung mit den zugehörigen Figuren näher erläutert. In diesen zeigen:

- Figur 1: ein erstes Ausführungsbeispiel einer Montagevorrichtung, wobei die Montagevorrichtung an einer Druckplattenbaugruppe befestigt ist, in einer Schnittansicht,
- Figur 2: die Montagevorrichtung und die Druckplattenbaugruppe aus Figur 1 in einer Draufsicht,
- Figur 3: die Montagevorrichtung und die Druckplattenbaugruppe aus Figur 1 in einer perspektivischen Ansicht, und
- Figur 4: ein zweites Ausführungsbeispiel einer Montagevorrichtung, wobei die Montagevorrichtung an einer Druckplattenbaugruppe befestigt ist, in einer halben Schnittansicht.

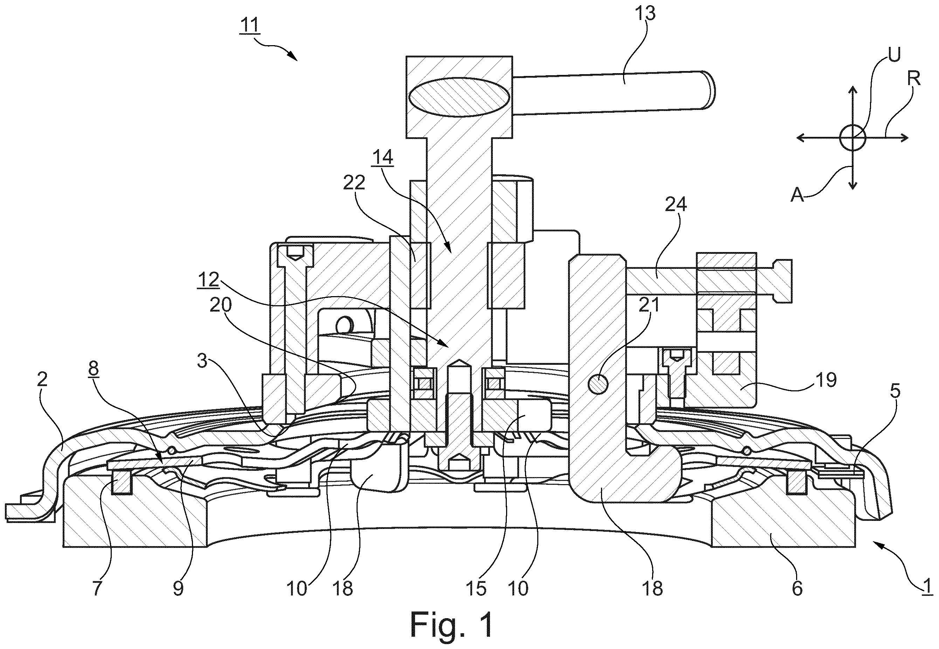

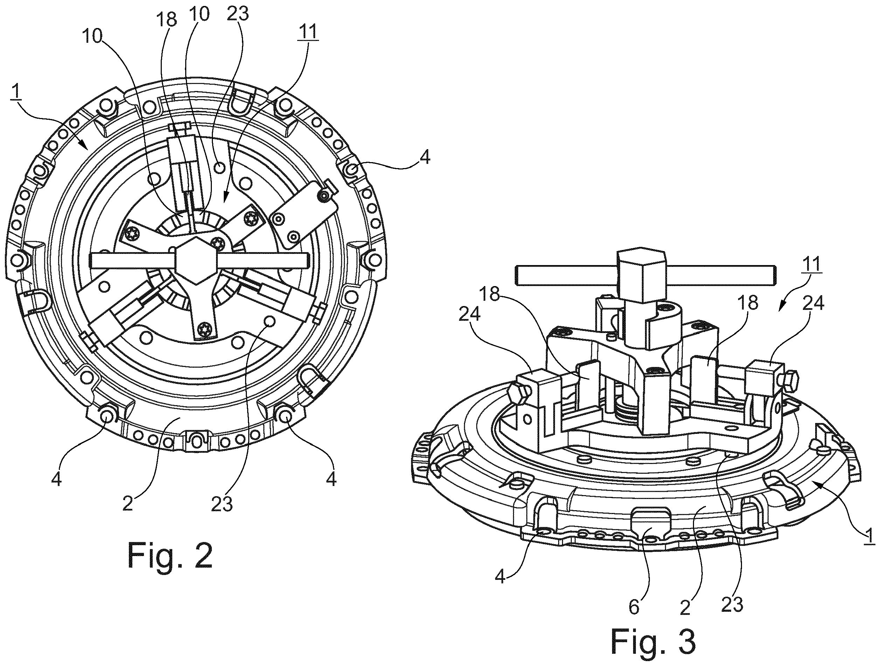

Die Figuren 1 bis 4 betreffen bevorzugte Ausführungsbeispiele einer Montagevorrichtung 11 zur gegenkraftfreien Montage einer Druckplattenbaugruppe 1 an einer Gegendruckplatte. Ferner betreffen die besagten Figuren sowohl ein Verfahren zur gegenkraftfreien Montage der Druckplattenbaugruppe 1 an der Gegendruckplatte, als auch ein Verfahren zur gegenkraftfreien Demontage der Druckplattenbaugruppe 1 von der Gegendruckplatte. Merkmale und Verfahrensschritte, die in der vorliegenden Beschreibung nicht als erfindungswesentlich gekennzeichnet sind, sind als optional zu verstehen.

Daher betrifft die nachfolgende Beschreibung auch weitere Ausführungsbeispiele der Montagevorrichtung 11 bzw. des Montage- oder Demontageverfahrens, die Teilkombinationen der im Folgenden zu erläuternden Merkmale und Verfahrensschritte aufweisen. Gleichermaßen sind diese Merkmale und Verfahrensschritte auch mit den in der Beschreibungseinleitung genannten Merkmale und Verfahrensschritte bzw. mit den in den Ansprüchen genannten Merkmalen und Verfahrensschritten frei kombinierbar. Die Druckplattenbaugruppe 1 ist insbesondere als Teil einer Reibungskupplung ausgebildet und für den Antriebsstrang eines Kraftfahrzeugs vorgesehen.

Die Druckplattenbaugruppe 1 weist einen Kupplungsdeckel 2 auf. In radialer Richtung R und in axialer Richtung A der Druckplattenbaugruppe 1 ist innerhalb des Kupplungsdeckels 2 eine in axialer Richtung A verlagerbare Anpressplatte 6 vorgesehen. Die Anpressplatte 6 ist bezüglich des Kupplungsdeckels 2 drehfest gelagert, beispielsweise mittels an der Anpressplatte 6 und am Kupplungsdeckel 2 vernieteter Blattfedern 5.

Am Kupplungsdeckel 2 ist eine Tellerfeder 9 mittels einer Schwenklagerung 8 gelagert. Die Schwenklagerung 8 kann unmittelbar durch den Kupplungsdeckel 2 ausgebildet werden, oder kann, wie dies in Figur 1 dargestellt ist, beispielsweise mittels eines Drahtrings, einer Zusatzfeder und mittels Tellerfederzentrierbolzen gebildet werden. Die Tellerfeder 9 weist mehrere, in Umfangsrichtung U der Druckplattenbaugruppe 1 voneinander beabstandete, insbesondere gleichmäßig voneinander beabstandete, Tellerfederzungen 10 auf. Die Tellerfederzungen 10 sind in einem radialen Innenbereich der Tellerfeder 9 ausgebildet und gehen im radialen Außenbereich der Tellerfeder 9 in einen Kraftrand der Tellerfeder 9 über.

Mittels ihres Kraftrands wirkt die Tellerfeder 9 auf die Anpressplatte 6, um beim Verkippen der Tellerfeder 9 um die Schwenklagerung 8 die Anpressplatte 6 in axialer Richtung A zu verlagern, das heißt die Druckplattenbaugruppe 1 einzurücken bzw. auszurücken. Die Wirkung der Tellerfeder 9 auf die Anpressplatte 6 kann unmittelbar erfolgen, insbesondere wenn die Anpressplatte 6 mit einem oder mit mehreren, in Umfangsrichtung U voneinander beabstandeten Anpressplattennocken ausgestattet ist, die sich in axialer Richtung A erstrecken, und an denen der Kraftrand der Tellerfeder 9 anliegt. Anstelle der Anpressplattennocken kann auch, wie dies in Figur 1 dargestellt ist, ein Verstellring 7 vorgesehen sein, der einer kraftbasierten oder wegbasierten Verschleißnachstelleinrichtung zuzuordnen ist, und dessen Rampen gleitbeweglich auf in der Anpressplatte 6 eingelassenen Gegenrampen aufliegen. Über den Verstellring 7 wirkt der Kraftrand der Tellerfeder 9 mittelbar auf die Anpressplatte 6.

Zur Komplettierung der Reibungskupplung fehlen eine Gegendruckplatte und eine Kupplungsscheibe, die beide in Figur 1 nicht dargestellt sind. Bei der komplettierten Reibungskupplung ist die Druckplattenbaugruppe 1, genauer gesagt der Kupplungsdeckel 2, mit der Gegendruckplatte, die in axialer Richtung A ortsfest ist, fest verbunden, insbesondere verschraubt. Hierzu weist der Kupplungsdeckel 2 in seinem Außenumfang mehrere, in Umfangsrichtung U voneinander beabstandete Verschraubungslöcher 4 auf.

In axialer Richtung A zwischen der Anpressplatte 6 und der Gegendruckplatte ist die Kupplungsscheibe angeordnet. Während die Gegendruckplatte, bezogen auf die Übertragung des Drehmoments, die Eingangsseite der Reibungskupplung bildet, bildet die Kupplungsscheibe, die reibschlüssig zwischen der in axialer Richtung A begrenzt verlagerbaren Anpressplatte 6 und der in axialer Richtung A ortsfesten Gegendruckplatte klemmbar ist, die Ausgangsseite der Reibungskupplung.

Die Reibungskupplung bzw. die in Figur 1 dargestellte Druckplattenbaugruppe 1 weist eine normal-eingerückte Druckplattenbaugruppe 1 auf bzw. ist als solche ausgebildet. Bei der normal-eingerückten Druckplattenbaugruppe 1 überwiegt die wirksame Kraft der Tellerfeder 9 im betätigungsfreien Zustand die Gegenkraft der Blattfedern 5, während bei einer normal-ausgerückten, nicht dargestellten Druckplattenbaugruppe die Gegenkraft der Blattfedern die wirksame Kraft der Tellerfeder bzw. einer Hebelfeder im betätigungsfreien Zustand überwiegt. Dementsprechend führt eine Betätigung der Tellerfeder 9 der normal-eingerückte, in Figur 1 dargestellten Druckplattenbaugruppe 1 zum Ausrücken der Druckplattenbaugruppe 1 durch Verkippen bzw. Umschnappen der Tellerfeder 9, das heißt zum Abhub der Anpressplatte 6 und zur Entfernung der Anpressplatte 6 von der Gegendruckplatte, wodurch der Reibschluss zur Kupplungsscheibe aufgehoben wird. Im Unterschied dazu führt eine Betätigung der Tellerfeder bzw. der Hebelfeder bei einer normal-ausgerückten, nicht dargestellten Druckplattenbaugruppe zum Einrücken der Druckplattenbaugruppe durch Verkippen der Tellerfeder bzw. Hebelfeder.

Die in Figur 1 dargestellte Druckplattenbaugruppe 1 ist als normal-eingerückte, gedrückte Druckplattenbaugruppe 1 ausgebildet. Wenn die Druckplattenbaugruppe 1 bzw. die entsprechende Reibungskupplung im Antriebsstrang eines Kraftfahrzeugs eingebaut ist, ist im Bereich einer Zentralöffnung 3, die im Kupplungsdeckel 2 vorgesehen ist, eine Ausrückeinrichtung vorgesehen, die eine drückende Kraft auf die Tellerfederzungen 10 ausübt, um die Reibungskupplung zu betätigen, das heißt die Druckplattenbaugruppe 1 auszurücken.

Umgekehrt kann die Druckplattenbaugruppe 1 durch Verlagerung der Schwenklagerung 8 an den radial äußeren Rand des Kraftrands der Tellerfeder 9 und durch Verlagerung der mittelbaren oder unmittelbaren Anlage des Kraftrands der Tellerfeder 9 an der Anpressplatte 6 in radialer Richtung R nach innen als normal-eingerückte, gezogene Druckplattenbaugruppe 1 ausgebildet werden. Hierbei sorgt im Betrieb der entsprechenden Reibungskupplung eine auf die Tellerfederzungen 10 wirkende, eine ziehende Kraft ausübende Ausrückeinrichtung für das Ausrücken der Druckplattenbaugruppe 1. Beide Ausbildungen der Druckplattenbaugruppe 1 sind durch die nachfolgend beschriebenen Montagevorrichtung 11 montierbar bzw. demontierbar.

Die in den Figuren 1 bis 3 dargestellte Montagevorrichtung 11 wird im Bereich der Zentralöffnung 3 des Kupplungsdeckels 2 auf den Kupplungsdeckel 2 aufgesetzt, das heißt in dem Bereich, in dem, wenn die Druckplattenbaugruppe 1 bzw. die Reibungskupplung im Antriebsstrang des Kraftfahrzeugs montiert ist, die Ausrückeinrichtung vorgesehen ist. Im Antriebsstrang handelt es sich hierbei üblicherweise um die Getriebeseite, mit Bezug auf Figur 1 um den oberen Bereich der Figur 1. Die Montagevorrichtung 11 ist zur gegenkraftfreien Montage der Druckplattenbaugruppe 1 an der Gegendruckplatte ausgebildet.

Die Montagevorrichtung 11 weist ein Basiselement 19 auf, das ausgebildet ist, außerhalb der Druckplattenbaugruppe 1, mit Bezug auf Figur 1 von der Getriebeseite kommend, auf dem Kupplungsdeckel 2 zur Anlage zu kommen. Das Basiselement 19 ist im Wesentlichen ringförmig ausgebildet und weist eine Zentralöffnung 20 auf, die koaxial zur Zentralöffnung 3 des Kupplungsdeckels 2 ausgerichtet ist und deren Durchmesser im Wesentlichen dem Durchmesser der Zentralöffnung 3 des Kupplungsdeckels 2 entspricht.

Darüber hinaus weist die Montagevorrichtung 11 mehrere Hakenelemente 18 auf, die ausgebildet sind, den Kupplungsdeckel 2 der Druckplattenbaugruppe 1 zu hintergreifen, um die Montagevorrichtung 11 bezüglich der Druckplattenbaugruppe 1 zumindest in axialer Richtung A ortsfest zu halten. Insbesondere sind die Hakenelemente 18 in Kombination mit dem Basiselement 19 ausgebildet, die Montagevorrichtung 11 in axialer Richtung A fest auf dem Kupplungsdeckel 2 zu halten.

Im dargestellten Ausführungsbeispiel sind insgesamt drei Hakenelemente 18 vorgesehen, die in Umfangsrichtung U der Montagevorrichtung 11 gleichmäßig voneinander beabstandet angeordnet sind, und die ausgebildet sind, den Kupplungsdeckel 2 von der Zentralöffnung 3 des Kupplungsdeckels 2 kommend zu hintergreifen. Hierzu sind die Hakenelemente 18 im Wesentlichen L- bzw. J-förmig ausgebildet und am Basiselement 19 der Montagevorrichtung 11 im Bereich der Zentralöffnung 20 des Basiselements 19 auf Drehachsen 21 gelagert, die im Wesentlichen tangential zur Zentralöffnung 20 ausgerichtet sind. Somit sind die Hakenelemente 18 in der Nähe der Zentralöffnung 20 verkippbar am Basiselement 19 gelagert, um den Kupplungsdeckel 2 von der Zentralöffnung 3 des Kupplungsdeckels 2 kommend zu hintergreifen.

Vorzugsweise sind die Hakenelemente 18 ausgebildet, jeweils zwischen zwei in Umfangsrichtung U benachbarten Tellerfederzungen 10 der Druckplattenbaugruppe 1 einzudringen und den Kupplungsdeckel 2 zu hintergreifen. Hierfür weisen die Hakenelemente 18 in Umfangsrichtung U der Montagevorrichtung 11 eine Dicke auf, die kleiner als der in Umfangsrichtung U der Druckplattenbaugruppe 1 gemessene Abstand zwischen den zwei benachbarten Tellerfederzungen 10 ist. Da die Anzahl der Tellerfederzungen 10 bei unterschiedlichen Druckplattenbaugruppen 1 variieren kann, ist es zudem von Vorteil, wenn die Hakenelemente 18 entlang ihrer bezüglich der Zentralöffnung 20 tangential verlaufenden Drehachsen 21 eine gewisse Verschiebbarkeit aufweisen, um bei unterschiedlichen Anzahlen von Tellerfederzungen 10 so verschoben werden zu können, dass sie jeweils zwischen zwei benachbarten Tellerfederzungen 10 in die Druckplattenbaugruppe 1 eindringen und den Kupplungsdeckel 2 hintergreifen können.

Obwohl dies in den Figuren nicht dargestellt ist, ist es auch möglich, dass der Abstand zwischen der Tellerfeder 9 bzw. den Tellerfederzungen 10 und dem Kupplungsdeckel 2 in axialer Richtung A der Druckplattenbaugruppe 1 so groß ist, dass die Hakenelemente 18 den Kupplungsdeckel 2 von der Zentralöffnung 3 des Kupplungsdeckels 2 kommend hintergreifen können, ohne hierbei zwischen zwei benachbarten Tellerfederzungen 10 einzudringen. Diese Möglichkeit besteht, ist aber mit Blick auf die strikten Bauraumerfordernisse und die Bemühungen, den axialen Bauraum moderner Druckplattenbaugruppen 1 zu verringern als eher unwahrscheinlich anzusehen.

Alternativ zu dem in den Figuren dargestellten Ausführungsbeispiel ist es auch möglich, das oder die Hakenelemente 18 als einen Teil eines Bajonettverschlusses auszubilden, während der zweite Teil des Bajonettverschlusses im Kupplungsdeckel 2, insbesondere am Rand der Zentralöffnung 3 des Kupplungsdeckels 2, ausgebildet ist. Somit bilden die Montagevorrichtung 11 und die Druckplattenbaugruppe 1 eine Bajonettverbindung aus, wobei das oder die Hakenelemente 18, die den ersten Teil des Bajonettverschlusses bilden, vorzugsweise in der Nähe der Zentralöffnung 20 des Basiselements 19 in Umfangsrichtung U verdrehbar am Basiselement 19 gelagert sind, um bei Verdrehung in Umfangsrichtung U in die Druckplattenbaugruppe 1 eindringen zu können und den Kupplungsdeckel 2 hintergreifen zu können.

Das dargestellte Ausführungsbeispiel der Montagevorrichtung 11 weist ferner eine Spanneinrichtung 24 bzw. mehrere Spanneinrichtungen 24 auf, die am Basiselement 19 vorgesehen sind, und die ausgebildet sind, auf die Hakenelemente 18 einzuwirken, um ein Herausspringen der Hakenelemente 18 zu verhindern. Beispielsweise sind die Spanneinrichtungen 24 als in radialer Richtung R der Montagevorrichtung 11 einschraubbare Bolzen ausgebildet, die auf die außerhalb der Druckplattenbaugruppe 1 angeordneten, freien Enden der im Wesentlichen L- bzw. J-förmigen Hakenelemente 18 einwirken, um während der Benutzung der Montagevorrichtung 11 ein ungewolltes Verkippen der Hakenelemente 18 um die Drehachse 21 zu verhindern, und um eine hinreichende Kraft zwischen den in der Druckplattenbaugruppe 1 angeordneten Enden der Hakenelemente 18 und der Auflagefläche des Basiselements 19 auf dem Kupplungsdeckel 2 zu erzeugen, so dass die Montagevorrichtung 11 hinreichend fest auf dem Kupplungsdeckel 2 gehalten werden kann. Es sind jedoch auch andere Formen der Spanneinrichtung 24 möglich, beispielsweise in Form eines Zugrings, dessen Durchmesser sich durch eine Spannschraube verringern lässt, und der die freien Enden der im Wesentlichen L- bzw. J-förmigen Hakenelemente 18 umgreift. Auch formschlüssige Spanneinrichtungen 24 sind möglich.

Ferner weist die Montagevorrichtung 11, insbesondere das Basiselement 19 der Montagevorrichtung 11, eine oder mehrere Verdrehsicherungen 23 auf, die mit dem Kupplungsdeckel 2 in Eingriff bringbar sind, um ein Verdrehen der Montagevorrichtung 11 in Umfangsrichtung U der Druckplattenbaugruppe 1 zu verhindern. Diese Verdrehsicherungen 23 können beispielsweise als eine oder mehrere in axialer Richtung A der Montagevorrichtung 11 bzw. der Druckplattenbaugruppe 1 einschraubbare Bolzen ausgebildet sein, die in entsprechende Öffnungen des Kupplungsdeckels 2 eingreifen können" können aber auch beispielsweise als feste Axialvorsprünge am Basiselement 19 ausgebildet sein. Um die Verdrehsicherung 23 auszubilden, reicht es aus, wenn einer der Bolzen (oder ein Axialvorsprung in eine der kupplungsdeckelseitigen Öffnungen eingreift.

Für die Montagevorrichtung 11 ist es insbesondere von Vorteil, wenn in diesem Zusammenhang die Drehsymmetrie der Montagevorrichtung 11 mit der Drehsymmetrie der Druckplattenbaugruppe 1, insbesondere der Drehsymmetrie der Tellerfeder 9, übereinstimmt, da dadurch sichergestellt wird, dass, wenn die Verdrehsicherungen 23 in den Kupplungsdeckel 2 eingreifen, auch die Hakenelemente 18 so positioniert sind, dass sie jeweils zwischen zwei benachbarten Tellerfederzungen 10 in die Druckplattenbaugruppe 1 eindringen können.

Wenn die einheitliche Drehsymmetrie nicht gegeben ist, gibt es unter Umständen nur eine Drehposition, in der die Verdrehsicherung 23 in den Kupplungsdeckel 2 eingreift, und in der die Hakenelemente 18 jeweils zwischen zwei benachbarten Tellerfederzungen 10 in die Druckplattenbaugruppe 1 eindringen können. In diesem Fall ist es insbesondere von Vorteil, wenn die Hakenelemente 18 entlang ihrer Drehachsen 21 eine gewisse Verschiebbarkeit in tangentialer Richtung bezüglich der Zentralöffnung 20 des Basiselements 19 aufweisen.

Im dargestellten Ausführungsbeispiel ist auf dem Basiselement 19 ein Spindelhalter 22 befestigt. Der Spindelhalter 22 kann jedoch auch einteilig mit dem Basiselement 19 ausgebildet sein. Im Spindelhalter 22 ist eine Spindeleinheit 14 drehbar gelagert, wobei eine Drehung der Spindeleinheit 14 in Umfangsrichtung U der Montagevorrichtung 11 in eine Axialbewegung umgesetzt wird.

Zur Drehung der Spindeleinheit 14 ist beispielsweise ein Handrad 13 vorgehen, das am frei zugänglichen Ende der Spindeleinheit 14 drehfest mit der Spindeleinheit 14 verbunden ist. Anstelle des Handrads 13 kann beispielsweise auch eine Kurbel zum Antrieb der Spindeleinheit 14 vorgesehen sein. Ebenso ist es möglich, eine Werkzeugaufnahme vorzusehen, um die Spindeleinheit 14 beispielsweise mit einem Maulschlüssel oder einem Knarrenschlüssel drehen zu können. Ebenso ist ein elektromotorischer Antrieb möglich. Anstelle der Spindeleinheit 14 kann beispielsweise auch ein hydraulischer Nehmerzylinder vorgesehen sein, durch den die Axialbewegung mittels hydraulischen Drucks erzeugt wird.

An der Spindeleinheit 14 ist ein Ausrückelement 12 befestigt, so dass das Ausrückelement 12 in axialer Richtung A durch die Spindeleinheit 14 verlagerbar ist und beim Antrieb der Spindeleinheit 14 ausgebildet ist, die Tellerfederzungen 10 der Druckplattenbaugruppe 1 mit einer Axialkraft zu beaufschlagen, um die normal-ausgerückte Druckplattenbaugruppe 1 auszurücken. Somit ist das Ausrückelement 12 in axialer Richtung A der Montagevorrichtung 11 verlagerbar angeordnet. Im dargestellten Ausführungsbeispiel ist das Ausrückelement 12 als Bestandteil der Spindeleinheit 14 anzusehen und kann in diesem Zusammenhang einteilig mit der Spindeleinheit 14 oder als separates Bauteil am im Betrieb der Montagevorrichtung 11 nicht frei zugänglichen Ende der Spindeleinheit 14 ausgebildet sein.

Im dargestellten Ausführungsbeispiel weist das Ausrückelement 12 in seinem Endbereich, das heißt in seinem im Betrieb der Montagevorrichtung 11 nicht frei zugänglichen Ende der Spindeleinheit 14 ein Druckelement 15 auf, das ausgebildet ist, mit den Tellerfederzungen 10 vom Kupplungsdeckel 2 kommend in Anlage zu kommen, um die normal-eingerückte, gedrückte Druckplattenbaugruppe 1 bei Drehung der Spindeleinheit 14 auszurücken. Hierbei übt das Druckelement 15 einen mit Bezug auf Figur 1 nach unten gerichtete, das heißt in die Druckplattenbaugruppe 1 hineingerichtete, Axialkraft auf die Tellerfederzungen 10 aus. Insbesondere ist das Druckelement 15 hierfür als scheibenförmiges Element ausgebildet.

Es ist jedoch auch möglich, dass das Ausrückelement 12 anstelle des Druckelements 15 in seinem Endbereich ein Zugelement aufweist, das hakenförmig ausgebildet ist, um die Tellerfederzungen 10 von der Anpressplatte der Druckplattenbaugruppe 1 kommend zu hintergreifen, um die nicht dargestellte, normal-eingerückte, gezogene Druckplattenbaugruppe 1 auszurücken. Beim Aufsetzen der Montagevorrichtung 11 auf die Druckplattenbaugruppe 1 ist das hakenförmige Zugelement dabei so auszurichten, dass seine Hakenabschnitte zwischen benachbarten Tellerfederzungen 10 in die Druckplattenbaugruppe 1 eindringen können. Dann wird das hakenförmige Zugelement bezüglich des Basiselements 19 in Umfangsrichtung U der Montagevorrichtung 11 bzw. der Druckplattenbaugruppe 1 verdreht, um die Tellerfederzungen 10 zu hintergreifen, und um von der Anpressplatte 6 kommend mit den Tellerfederzungen 10 in Anlage zu kommen. Mittels einer geeigneten Fixiereinrichtung sollte die Ausrichtung des hakenförmigen Zugelements bezüglich des Basiselements 19 aufrecht erhalten werden, auch wenn die Spindeleinheit 14 gedreht wird, da sonst, insbesondere wenn das Zugelement mit den Tellerfederzungen 10 noch nicht in Anlage ist, ein Herausspringen des Zugelements zwischen den benachbarten Tellerfederzungen möglich ist.

Es ist von Vorteil, wenn bei der Montagevorrichtung 11 das Druckelement 15 durch das Zugelement ersetzt werden kann, und umgekehrt, um ein möglichst breites Anwendungsspektrum der Montagevorrichtung 11 zu ermöglichen. Ebenso ist es von Vorteil, wenn Druckelement 15 und Zugelement als ein einziges Ausrückelement 12 für beide Anwendungsfälle ausgebildet sein können, so dass sich ein anwendungsspezifischer Wechsel bei gedrückten und gezogenen Druckplattenbaugruppen erübrigt.

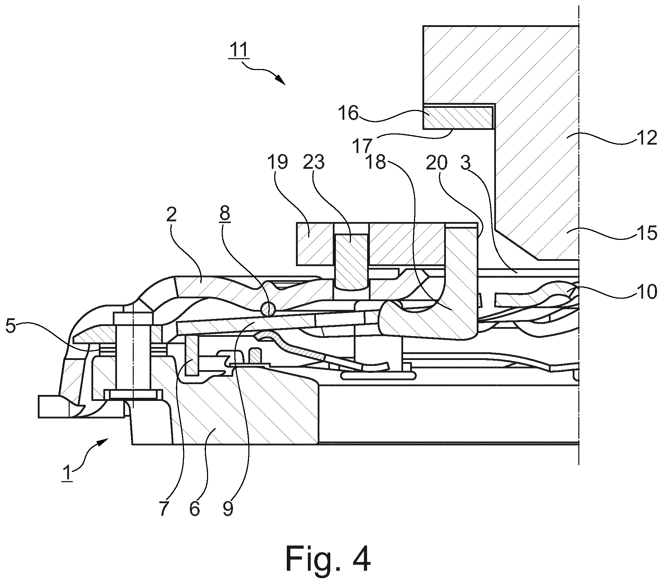

Im Unterschied zu den vorangegangenen Ausführungsbeispielen ist im Ausführungsbeispiel, das in Figur 4 dargestellt ist, das Ausrückelement 12 mit einem Anschlag 17 in axialer Richtung A der Montagevorrichtung 11 bzw. der Druckplattenbaugruppe 1 versehen, der durch Hinzufügen oder Wegnehmen von einer oder mehrerer Distanzscheiben 16 verändert werden kann. Bei Bewegung des Ausrückelements 12 in axialer Richtung A kommt der Anschlag 17 vorzugsweise mit einem entsprechenden Bereich des Basiselements 19 in Anlage, um die Axialbewegung des Ausrückelements 12 zu begrenzen.

Der Anschlag 17 ist insbesondere von Vorteil, um ein Überdrücken, gegebenenfalls auch ein Überziehen, der Tellerfederzungen 10 bei der Benutzung der Montagevorrichtung 11 zu verhindern. Dies ist insbesondere dann von Vorteil, wenn die Druckplattenbaugruppe 1 eine Verschleißnachstelleinrichtung, insbesondere eine wegbasierte Verschleißnachstelleinrichtung, aufweist, da durch das Überdrücken bzw. Überziehen der Tellerfederzungen 10 die Antriebsklinke der wegbasierten Verschleißnachstelleinrichtung beschädigt werden kann.

Obwohl bei der Beschreibung der vorangegangenen Ausführungsbeispiele die Montagevorrichtung 11 als Montagevorrichtung bezeichnet und beschrieben worden ist, beinhaltet diese Wahl der Bezeichnung auch die Demontage. Somit handelt es sich bei der Montagevorrichtung 11 gleichermaßen um eine Vorrichtung, die zur gegenkraftfreien Demontage der Druckplattenbaugruppe 1 von der Gegendruckplatte der Reibungskupplung geeignet ist.

Die vorangegangenen Ausführungsbeispiele betreffen eine Montagevorrichtung 11 zur gegenkraftfreien Montage einer Druckplattenbaugruppe 1 an einer Gegendruckplatte mit zumindest einem bezüglich der Druckplattenbaugruppe 1 in axialer Richtung A verlagerbaren Ausrückelement 12, das ausgebildet ist, Tellerfederzungen 10 der Druckplattenbaugruppe 1 mit einer Axialkraft zu beaufschlagen, um die normal-eingerückte Druckplattenbaugruppe 1 auszurücken, und mit zumindest einem Hakenelement 18, das ausgebildet ist, einen Kupplungsdeckel 2 der Druckplattenbaugruppe 1 zu hintergreifen, um die Montagevorrichtung 11 bezüglich der Druckplattenbaugruppe 1 zumindest in axialer Richtung A ortsfest zu halten, wenn das Ausrückelement 12 die Tellerfederzungen 10 der Druckplattenbaugruppe 1 mit der Axialkraft beaufschlagt.

Darüber hinaus betreffen die vorangegangenen Ausführungsbeispiele ein Verfahren zur gegenkraftfreien Montage einer Druckplattenbaugruppe 1 an einer Gegendruckplatte mittels einer Montagevorrichtung 11 nach zumindest einem der vorangegangenen Ausführungsbeispiele, wobei die Montagevorrichtung 11 mittels ihres Basiselements 19, auf eine, insbesondere getriebeseitige, Oberseite des Kupplungsdeckels 2 der Druckplattenbaugruppe 1 aufgesetzt wird, das oder die Hakenelemente 18 verdreht und/oder verkippt werden, um eine, insbesondere anpressplattenseitige, Hinterseite des Kupplungsdeckels 2 zu hintergreifen, so dass die Montagevorrichtung 11 in axialer Richtung A fest auf dem Kupplungsdeckel 2 aufsitzt, das Ausrückelement 12 bezüglich der Druckplattenbaugruppe 1 in axialer Richtung A verlagert wird, um die Tellerfederzungen 10 mit einer Axialkraft zu beaufschlagen und die normal-eingerückte Druckplattenbaugruppe 1 auszurücken, und die Druckplattenbaugruppe 1 mit der Gegendruckplatte fest verbunden wird, insbesondere im Bereich der Verschraubungslöcher 4 verschraubt wird.

Ferner betreffen die vorangegangenen Ausführungsbeispiele ein Verfahren zur gegenkraftfreien Demontage einer Druckplattenbaugruppe 1 von einer Gegendruckplatte mittels einer Montagevorrichtung 11 nach zumindest einem der vorangegangenen Ausführungsbeispiele, wobei die Montagevorrichtung 11 mittels ihres Basiselements 19 auf eine, insbesondere getriebeseitige, Oberseite des Kupplungsdeckels 2 der Druckplattenbaugruppe 1 aufgesetzt wird, das oder die Hakenelemente 18 verdreht und/oder verkippt werden, um eine, insbesondere anpressplattenseitige, Hinterseite des Kupplungsdeckels 2 zu hintergreifen, so dass die Montagevorrichtung 11 in axialer Richtung A fest auf dem Kupplungsdeckel 2 aufsitzt, das Ausrückelement 12 bezüglich der Druckplattenbaugruppe 1 in axialer Richtung A verlagert wird, um die Tellerfederzungen 10 mit einer Axialkraft zu beaufschlagen und die normal-eingerückte Druckplattenbaugruppe 1 auszurücken, und die Druckplattenbaugruppe 1 von der Gegendruckplatte gelöst wird, insbesondere durch Lösen der Verschraubung im Bereich der Verschraubungslöcher 4.

## Patentansprüche

1. Kombination aus Druckplattenbaugruppe (1) und Montagevorrichtung (11) zur gegenkraftfreien Montage der Druckplattenbaugruppe (1) an einer Gegendruckplatte mit zumindest einem bezüglich der Druckplattenbaugruppe (1) in axialer Richtung (A) verlagerbaren Ausrückelement (12), das ausgebildet ist, Tellerfederzungen (10) der Druckplattenbaugruppe (1) mit einer Axialkraft zu beaufschlagen, um die normal-eingerückte Druckplattenbaugruppe (1) auszurücken, mit einem Basiselement (19), das ausgebildet ist, außerhalb der Druckplattenbaugruppe (1) auf einem Kupplungsdeckel (2) der Druckplattenbaugruppe (1) zur Anlage zu kommen, und an dem das Ausrückelement (12) in axialer Richtung (A) der Montagevorrichtung (11) verlagerbar angeordnet ist, und mit zumindest einem Hakenelement (18), das ausgebildet ist, den Kupplungsdeckel (2) zu hintergreifen, um die Montagevorrichtung (11) bezüglich der Druckplattenbaugruppe (1) zumindest in axialer Richtung (A) ortsfest zu halten, wenn das Ausrückelement (12) die Tellerfederzungen (10) der Druckplattenbaugruppe (1) mit der Axialkraft beaufschlagt, **dadurch gekennzeichnet, dass** das Hakenelement (18) einen Teil eines Bajonettverschlusses bildet und ausgebildet ist, mit dem Kupplungsdeckel (2) als zweiten Teil eine Bajonettverbindung auszubilden.

2. Kombination aus Druckplattenbaugruppe (1) und Montagevorrichtung (11) nach Anspruch 1, wobei mehrere Hakenelemente (18) in Umfangsrichtung (U) der Montagevorrichtung (11), vorzugsweise gleichmäßig, voneinander beabstandet angeordnet sind, und die Hakenelemente (18) ausgebildet sind, den Kupplungsdeckel (2) von einer Zentralöffnung (3) des Kupplungsdeckels (2) kommend zu hintergreifen.

3. Kombination aus Druckplattenbaugruppe (1) und Montagevorrichtung (11) nach Anspruch 1 oder 2, wobei das Basiselement (19) und das Hakenelement (18) ausgebildet sind, die Montagevorrichtung (11) in axialer Richtung (A) fest auf dem Kupplungsdeckel (2) zu halten.

4. Kombination aus Druckplattenbaugruppe (1) und Montagevorrichtung (11) nach zumindest einem der Ansprüche 1 bis 3, wobei das Basiselement (19) eine Zentralöffnung (20) aufweist, deren Durchmesser vorzugsweise im Wesentlichen dem Durchmesser der Zentralöffnung (3) des Kupplungsdeckels (2) entspricht, und das Hakenelement (18) in der Nähe der Zentralöffnung (20) verkippbar und/oder in Umfangsrichtung (U) verdrehbar am Basiselement (19) gelagert ist, um den Kupplungsdeckel (2) zu hintergreifen.

5. Kombination aus Druckplattenbaugruppe (1) und Montagevorrichtung (11) nach zumindest einem der Ansprüche 1 bis 4, wobei das Ausrückelement (12) in seinem Endbereich ein Druckelement (15) aufweist, das ausgebildet ist, mit den Tellerfederzungen (10) vom Kupplungsdeckel (2) kommend in Anlage zu kommen, um die normal-eingerückte, gedrückte Druckplattenbaugruppe (1) auszurücken.

6. Kombination aus Druckplattenbaugruppe (1) und Montagevorrichtung (11) nach zumindest einem der Ansprüche 1 bis 4, wobei das Ausrückelement (12) in seinem Endbereich ein Zugelement aufweist, das hakenförmig ausgebildet ist, um die Tellerfederzungen (10) von einer Anpressplatte (6) der Druckplattenbaugruppe (1) kommend zu hintergreifen, um die normal-eingerückte, gezogenen Druckplattenbaugruppe (1) auszurücken.

7. Kombination aus Druckplattenbaugruppe (1) und Montagevorrichtung (11) nach zumindest einem der Ansprüche 1 bis 6, wobei die Montagevorrichtung (11), vorzugsweise das Basiselement (19) der Montagevorrichtung (11), zumindest eine Verdrehsicherung (23) aufweist, die mit dem Kupplungsdeckel (2) in Eingriff bringbar ist, um ein Verdrehen der Montagevorrichtung (11) in Umfangsrichtung (U) zu verhindern.

8. Kombination aus Druckplattenbaugruppe (1) und Montagevorrichtung (11) nach zumindest einem der Ansprüche 1 bis 7, wobei die Montagevorrichtung (11), vorzugsweise das Basiselement (19) der Montagevorrichtung (11), zumindest eine Spanneinrichtung (24) aufweist, die auf das oder die Hakenelemente (18) einwirkt, um ein Herausspringen des oder der Hakenelemente (18) während des Ausrückvorgangs zu verhindern.

## Claims

1. Combination of a pressure plate assembly (1) and a mounting apparatus (11) for mounting the pressure plate assembly (1) in a manner which is free from counterforce on a counterpressure plate with at least one release element (12) which can be moved in the axial direction (A) with regard to the pressure plate assembly (1) and is configured to load cup spring tongues (10) of the pressure plate assembly (1) with an axial force, in order to release the normally engaged pressure plate assembly (1), with a base element (19) which is configured to come into contact with a clutch cover (2) of the pressure plate assembly (1) outside the pressure plate assembly (1), and on which the release element (12) is arranged such that it can be moved in the axial direction (A) of the mounting apparatus (11), and with at least one hook element (18) which is configured to engage behind the clutch cover (2), in order to hold the mounting apparatus (11) in a stationary manner at least in the axial direction (A) with regard to the pressure plate assembly (1) when the release element (12) loads the cup spring tongues (10) of the pressure plate assembly (1) with the axial force, **characterized in that** the hook element (18) forms a part of a bayonet closure and is configured to configure a bayonet connection with the clutch cover (2) as the second part.

2. Combination of a pressure plate assembly (1) and a mounting apparatus (11) according to Claim 1, a plurality of hook elements (18) being arranged spaced apart from one another, preferably uniformly, in the circumferential direction (U) of the mounting apparatus (11), and the hook elements (18) being configured to engage behind the clutch cover (2) in a manner which comes from a central opening (3) of the clutch cover (2).

3. Combination of a pressure plate assembly (1) and a mounting apparatus (11) according to Claim 1 or 2, the base element (19) and the hook element (18) being configured to hold the mounting apparatus (11) on the clutch cover (2) fixedly in the axial direction (A).

4. Combination of a pressure plate assembly (1) and a mounting apparatus (11) according to at least one of Claims 1 to 3, the base element (19) having a central opening (20), the diameter of which preferably corresponds substantially to the diameter of the central opening (3) of the clutch cover (2), and the hook element (18) being mounted on the base element (19) such that it can be tilted in the vicinity of the central opening (20) and/or can be rotated in the circumferential direction (U), in order to engage behind the clutch cover (2).

5. Combination of a pressure plate assembly (1) and a mounting apparatus (11) according to at least one of Claims 1 to 4, the release element (12) having a pressure element (15) in its end region, which pressure element (15) is configured to come into contact with the cup spring tongues (10) in a manner which comes from the clutch cover (2), in order to release the normally engaged, pressed pressure plate assembly (1).

6. Combination of a pressure plate assembly (1) and a mounting apparatus (11) according to at least one of Claims 1 to 4, the release element (12) having a pulling element in its end region, which pulling element is of hook-shaped configuration, in order to engage behind the cup spring tongues (10) in a manner which comes from a pressing plate (6) of the pressure plate assembly (1), in order to release the normally engaged, pulled pressure plate assembly (1).

7. Combination of a pressure plate assembly (1) and a mounting apparatus (11) according to at least one of Claims 1 to 6, the mounting apparatus (11), preferably the base element (19) of the mounting apparatus (11), having at least one anti-rotation safeguard (23) which can be brought into engagement with the clutch cover (2), in order to prevent a rotation of the mounting apparatus (11) in the circumferential direction (U).

8. Combination of a pressure plate assembly (1) and a mounting apparatus (11) according to at least one of Claims 1 to 7, the mounting apparatus (11), preferably the base element (19) of the mounting apparatus (11), having at least one tensioning device (24) which acts on the hook element or elements (18), in order to prevent the hook element or elements (18) from jumping out during the release operation.

## Revendications

1. Combinaison d'un groupe de plaques de pression (1) et d'un dispositif de montage (11) pour le montage sans force antagoniste du groupe de plaques de pression (1) au niveau d'une plaque de contrepression avec au moins un élément de débrayage (12) déplaçable en direction axiale (A) par rapport au groupe de plaques de pression (1), qui est configuré de façon à soumettre à une force axiale des lamelles de rondelles élastiques (10) du groupe de plaques de pression (1) afin de débrayer le groupe de plaques de pression (1) normalement embrayé, avec un élément de base (19) qui est configuré de façon à venir s'appliquer, à l'extérieur du groupe de plaques de pression (1), sur un couvercle d'embrayage (2) du groupe de plaques de pression (1), et sur lequel l'élément de débrayage (12) est disposé de façon déplaçable en direction axiale (A) du dispositif de montage (11), et avec au moins un élément de crochet (18), qui est configuré de façon à s'accrocher derrière le couvercle d'embrayage (2), afin de maintenir fixement le dispositif de montage (11) par rapport au groupe de plaques de pression (1) au moins en direction axiale (A), lorsque l'élément de débrayage (12) soumet les lamelles de rondelles élastiques (10) du groupe des plaques de pression (1) à la force axiale, **caractérisée en ce que** l'élément de crochet (18) forme une partie d'un verrou à baïonnette et est configuré de façon à former une liaison à baïonnette avec le couvercle d'embrayage (2) comme deuxième partie.

2. Combinaison d'un groupe de plaques de pression (1) et d'un dispositif de montage (11) selon la revendication 1, dans laquelle plusieurs éléments de crochet (18) sont disposés à distance l'un de l'autre, de préférence uniformément, dans la direction périphérique (U) du dispositif de montage (11), et les éléments de crochet (18) sont configurés de façon à s'accrocher derrière le couvercle d'embrayage (2) à partir d'une ouverture centrale (3) du couvercle d'embrayage (2).

3. Combinaison d'un groupe de plaques de pression (1) et d'un dispositif de montage (11) selon la revendication 1 ou 2, dans laquelle l'élément de base (19) et l'élément de crochet (18) sont configurés de façon à maintenir le dispositif de montage (11) de façon fixe en direction axiale (A) sur le couvercle d'embrayage (2).

4. Combinaison d'un groupe de plaques de pression (1) et d'un dispositif de montage (11) selon au moins une des revendications 1 à 3, dans laquelle l'élément de base (19) présente une ouverture centrale (20), dont le diamètre correspond de préférence essentiellement au diamètre de l'ouverture centrale (3) du couvercle d'embrayage (2), et l'élément de crochet (18) est monté sur l'élément de base (19) de façon basculante à proximité de l'ouverture centrale (20) et/ou de façon tournante dans la direction périphérique (U), afin de s'accrocher derrière le couvercle d'embrayage (2).

5. Combinaison d'un groupe de plaques de pression (1) et d'un dispositif de montage (11) selon au moins une des revendications 1 à 4, dans laquelle l'élément de débrayage (12) présente dans sa région d'extrémité un élément de pression (15), qui est configuré de façon à venir s'appliquer sur les lamelles de rondelles élastiques (10) à partir du couvercle d'embrayage (2), afin de débrayer le groupe de plaques de pression poussé normalement embrayé (1).

6. Combinaison d'un groupe de plaques de pression (1) et d'un dispositif de montage (11) selon au moins une des revendications 1 à 4, dans laquelle l'élément de débrayage (12) présente dans sa région d'extrémité un élément de traction, qui est configuré en forme de crochet, de façon à s'accrocher derrière les lamelles de rondelles élastiques (10) à partir d'une plaque de pression (6) du groupe de plaques de pression (1), afin de débrayer le groupe de plaques de pression tiré normalement embrayé (1).

7. Combinaison d'un groupe de plaques de pression (1) et d'un dispositif de montage (11) selon au moins une des revendications 1 à 6, dans laquelle le dispositif de montage (11), de préférence l'élément de base (19) du dispositif de montage (11), présente au moins un blocage de rotation (23), qui peut être mis en prise avec le couvercle d'embrayage (2), afin d'empêcher une rotation du dispositif de montage (11) dans la direction périphérique (U).

8. Combinaison d'un groupe de plaques de pression (1) et d'un dispositif de montage (11) selon au moins une des revendications 1 à 7, dans laquelle le dispositif de montage (11), de préférence l'élément de base (19) du dispositif de montage (11), présente au moins un dispositif de serrage (24), qui agit sur le ou les élément(s) de crochet (18), afin d'empêcher un décrochage du ou des élément(s) de crochet (18) pendant l'opération de débrayage.
